# EUROPEAN PATENT APPLICATION

(11) **EP 4 234 063 A1**
(43) Date of publication of application: **30.08.2023**
(21) Application number: 22159267.8
(22) Date of filing: 28.02.2022
(51) Int. Cl.: B01D 29/23, B01D 29/66, B01D 29/96

(54) **A FILTER ARRANGEMENT, A FLUID HANDLING SYSTEM AND A METHOD**

(71) Applicant: Alfa Laval Corporate AB, 221 00 Lund (SE)
(72) Inventor: ANDERSEN, Jens Folkmar, DK-7000 FREDERICIA (DK); REHHOFF, Kenneth, DK-5000 ODENSE C (DK)
(74) Representative: Alfa Laval Attorneys

(57) **Abstract**

The disclosure relates to a filter arrangement (1) for a fluid handling system (2), said filter arrangement (1) comprising: a filter housing (4) comprising a fluid inlet (6), a first outlet (8) and a second outlet (10); a filter element (12), which is displaceable in a linear direction in the filter housing (4) to a first position and to a second position; and a valve arrangement (14), which is displaceable in the linear direction together with the filter element (12); wherein the valve arrangement (14) comprises a first and a second valve disc (16,18), which are configured to control a fluid flow in the filter housing (4) and through the filter element (12); wherein, when the filter element (12) is displaced in the first position, the fluid flow is directed through the filter in a first direction, and the first valve disc (16) is displaced to close the second outlet (10); and wherein, when the filter element (12) is displaced in the second position, the fluid flow is directed through the filter in an opposite direction to the first direction, and the second valve disc (18) is displaced to close the first outlet (8). The disclosure further relates to a fluid handling system (2) and a method for flushing and cleaning a filter element (12) of a filter arrangement (1).

## Description

### Technical field

The present disclosure relates to a filter arrangement for a fluid handling system, a fluid handling system and a method for flushing and cleaning a filter element of a filter arrangement according to the appended claims.

### Background art

Filter arrangements are commonly used in fluid handling systems to remove undesired particles and solids from fluids. During filtration, the fluid is passed through a filter element and the undesired particles and solids are retained on the filter element, while the filtrated fluid passes through the filter element and continues downstream in the fluid handling system. However, as solids begin to accumulate on the filter element, the fluid flow rate through the fluid handling system and through the filter element decreases. Further, the solids retained on the filter may form a sediment on the filter element, which may decrease the efficiency of the fluid handling system.

A known method for cleaning the filter element is to frequently remove the filter element from the fluid handling system and to clean it manually. During removal and cleaning of the filter element the fluid handling system may be offline and out of operation.

In order to avoid interruptions in the fluid handling system during cleaning of the filter element, filter assemblies have been developed, wherein the interruption in the fluid handling system is very short or non-existent.

Document US2005121401 A1 discloses a backwash flushing filter assembly comprising a rotatable valve assembly and a filter element assembly arranged in a filter housing assembly. The filter element is cleaned by turning the rotatable valve assembly so that a reversed flow of fluid through the filter element assembly and filter element is achieved.

### Summary

A problem with the solutions of the prior art is that the filter element must be displaced and moved in several directions for cleaning. A further problem with the solutions of the prior art is that the filter assembly only may be used in one single filtering direction. There is thus a need for an improved filter arrangement for a fluid handling system.

It is an object of the present disclosure to mitigate, alleviate or eliminate one or more of the above-identified deficiencies and disadvantages in the prior art and solve at least the above mentioned problem.

Accordingly, it is an object of the invention to provide a filter arrangement for a fluid handling system, which requires an uncomplicated arrangement to switch between filtering and cleaning positions.

It is further an object of this invention to provide a filter arrangement for a fluid handling system, which may be used in at least two filtering directions.

It is further an object of this invention to provide a simplified as well as a robust and reliable filter arrangement.

These objectives are achieved by a filter arrangement according to the appended claims. These objectives are also achieved by a fluid handling system according to the appended claims. Further, these objectives are also achieved by a method for flushing and cleaning a filter element according to the appended claims.

According to an aspect there is provided a filter arrangement for a fluid handling system, the filter arrangement comprising: a filter housing comprising a fluid inlet, a first outlet and a second outlet; a filter element, which is displaceable in a linear direction in the filter housing to a first position and to a second position; and a valve arrangement, which is displaceable in the linear direction together with the filter element; wherein the valve arrangement comprises a first and a second valve disc, which are configured to control a fluid flow in the filter housing and through the filter element; wherein, when the filter element is displaced in the first position, the fluid flow is directed through the filter in a first direction, and the first valve disc is displaced to close the second outlet; and wherein, when the filter element is displaced in the second position, the fluid flow is directed through the filter in an opposite direction to the first direction, and the second valve disc is displaced to close the first outlet.

Due to the linearly displacement and movement of the filter element an uncomplicated and reliable arrangement to switch between filtering and cleaning positions is required. Further, the filter arrangement can be used for filtering a fluid when the filter element is displaced in the first position, and for cleaning the filter element, when the filter element is displaced in the second position. Alternatively, the filter arrangement can be used for filtering a fluid when the filter element is displaced in the second position, and for cleaning the filter element, when the filter element is displaced in the first position. Thus, the filter arrangement may be used in at least two filtering directions.

The filter arrangement is configured and adapted to be used in a fluid handling system for removing undesired particles and solids from a fluid. The fluid enters the filter housing through the fluid inlet. From the fluid inlet, the fluid may selectively flow out of the filter housing through the first or the second outlet depending on if the first or the second position of the filter element is selected for filtering. The fluid inlet, first outlet and second outlet may be provided with connection pipes, which are configured to be connected to tubes and pipes in the fluid handling system.

The filter element may be configured to trap and remove undesired particles and solids of different sizes and different shapes from the fluid. The filter element may be made of metal or plastic or a combination thereof.

The first and second valve discs may have a fluid tight configuration. The first and second valve discs may together with the filter housing provide a valve arrangement. In a closed position, the first valve disc abuts the valve housing and thus prevent the fluid to pass the first valve disc. The second valve disc is in an open position when the first valve is in the closed position. In a closed position, the second valve disc abuts the valve housing and thus prevent the fluid to pass the second valve disc. The first valve disc is in an open position when the second valve disc is in the closed position.

In order to filtering the fluid, the filter element is displaced in the first position, the fluid flow is directed through the filter in a first direction, and the first valve disc is displaced to close the second outlet. Fluid enters the fluid inlet and flows through the filter element in the first direction. Particles and solids are removed from the fluid when the fluid flows through the filter element in the first direction. Since the second outlet is closed by the first valve disc, the filtered fluid flows out through the first outlet after the fluid has passed through the filter element. In order to flushing and clean the filter element, the filter element is displaced in the second position, the fluid flow is directed through the filter in an opposite direction to the first direction, and the second valve disc is displaced to close the first outlet. Fluid enters the fluid inlet and flows through the filter element in an opposite direction to the first direction. Particles and solids accumulated on the filter element are removed from the filter element when the fluid flows through the filter element in the opposite direction to the first direction. Since the first outlet is closed by the second valve disc, the fluid together with particles and solids that have been released from the filter element flows out through the second outlet after the fluid has passed through and cleaned the filter element.

Alternatively, in order to filtering the fluid, the filter element is displaced in the second position, the fluid flow is directed through the filter in an opposite direction to the first direction, and the second valve disc is displaced to close the first outlet. Fluid enters the fluid inlet and flows through the filter element in an opposite direction to the first direction. Particles and solids are removed from the fluid when the fluid flows through the filter element in the opposite direction to the first direction. Since the first outlet is closed by the second valve disc, the filtered fluid flows out through the second outlet after the fluid has passed through the filter element. In order to flushing and clean the filter element, the filter element is displaced in the first position, the fluid flow is directed through the filter in the first direction, and the first valve disc is displaced to close the second outlet. Fluid enters the fluid inlet and flows through the filter element in the first direction. Particles and solids accumulated on the filter element are removed from the filter element when the fluid flows through the filter element in the first direction. Since the second outlet is closed by the first valve disc, the fluid together with particles and solids that have been released from the filter element flows out through the first outlet after the fluid has passed through and cleaned the filter element.

According to a further aspect, the filter element, is restricted to a single linear displacement in two opposite directions along a common axis.

Due to the single linearly displacement and movement of the filter element an uncomplicated arrangement to switch between the filtering and cleaning positions is required. Further, the first and second valve discs are restricted to a single linear displacement in two opposite directions along a common axis, which reduces wear of contact surfaces between the first valve disc and the filter housing, and contact surfaces between the second valve disc and the filter housing. The filter element is displaced and moved only linearly in the filter housing for cleaning. The filter element is displaced and moved only linearly in the filter housing in one direction only for filtering.

According to a further aspect, the filter element in the first position is configured to filtering the fluid in the fluid flow, and wherein the filter element in the second position is configured to be flushed and cleaned by the fluid in the fluid flow.

When the filter element is in the first position, the fluid is filtered from particles and solids, where after the filtered fluid flows out through the first outlet. When the filter element is in the second position, particles and solids accumulated on the filter element are removed from the filter element by flushing the filter element with fluid.

The fluid for flushing and cleaning the filter element, e.g. when the filter element is in the second position, may be the same fluid or same type of fluid which is filtered. Alternatively, the fluid for flushing and cleaning the filter element, e.g. when the filter element is in the second position, may be another type of fluid, such as a cleaning fluid, which for example may comprise a detergent and/or water or may be water.

According to a further aspect, the filter element has an axial extension and an outer surface encircling a center axis.

The axial extension of the filter element may increase the filter surface. In addition, arranging the outer surface of the filter element, so that the outer surface encircling a center axis of the filter element, the filter surface may be increased. An increased filter surface may have a substantial filtering capacity and the intervals between filtering and cleaning may be increased. Further, an increased filter surface may reduce the pressure drop over the filter element. The filter element may have a cylindrical shape. The filter element may have a circular cross section, a polygonal cross section, a square cross section, a triangular cross section or similar.

According to a further aspect, the fluid flow in the first position is configured to flow in through a first end opening of the filter element and out through the outer surface of the filter element, and wherein the fluid flow in the second position is configured to flow in through the outer surface of the filter element and out through the first end opening of the filter element.

The inner and outer surfaces of the filter element may have a substantial area. The filter element may have an open first end, which allows the fluid to flow into the filter element. From an inside area of the filter element, the fluid passes through the filter surface and out through the outer surface of the filter element to be filtered. For flushing and cleaning the filter element, the fluid flows in through the outer surface of the filter element, when the filter element is in the second position. Particles and solids accumulated on the inner surface of the filter element are removed from the filter element when the fluid flows through the outer surface of the filter element and out through the first end opening of the filter element.

According to a further aspect, a third valve disc, which is provided with through openings, is arranged at the first end opening of the filter element and the second valve disc is arranged to close a second end opening of the filter element.

The through openings in the third valve disc allow fluid to flow into the filter element or out from the filter element. The second valve disc is arranged to close the second end opening of the filter element and prevent fluid to flow out of the filter element through the second end opening. Instead, the second valve disc may guide the fluid flow out through the outer surface of the filter element.

According to a further aspect, the third valve disc comprises a sealing element at the periphery, wherein the sealing element is configured to guide the fluid flow through openings of the third valve disc.

The sealing element at the periphery of the third valve disc may be an O-ring or a gasket. In a position when the sealing element abuts an abutment surface of the filter housing, the sealing element together with the abutment surface guide the fluid flow through openings of the third valve disc and into the filtering element. Further, the sealing element prevents unfiltered fluid to pass between the periphery of third valve disc and the abutment surface of the filter housing and further out of the first or second outlet.

According to a further aspect, the first valve disc is arranged at a distance from the filter element.

The first valve disc is displaceable in the linear direction in the filter housing. When the first valve disc is in the first and second position, fluid may flow in an area or a space between the first valve disc and the filter element. A distance element, such as a strut or a bar may be arranged between the first valve disc and the filter element, or specifically between the first valve disc and the third valve disc. A displacement of the filter element may also displace the first valve disc by means of the distance element.

According to a further aspect, the first and second valve discs comprise a sealing element at the periphery.

The sealing element at the periphery of the first valve disc may be an O-ring or a gasket, which prevents fluid to pass by the periphery of the first valve disc and the filter housing. The sealing element at the periphery of the second valve disc may be an O-ring or a gasket, which prevents fluid to pass by the periphery of the second valve disc and the filter housing.

According to a further aspect, the first and second valve discs are connected to a central actuating shaft, which extends through a first end wall of the filter housing.

The central actuating shaft defines the position or positions of the first and second valve discs in relation to each other and to the filter housing. The central actuating shaft may be displaced in the filter housing. Displacing the central actuating shaft may simultaneously displace the first and second valve discs. A radial seal may be arranged between the central actuating shaft and the first end wall of the filter housing in order to prevent fluid leakage between the central actuating shaft and the first end wall. The central actuating shaft may also extend through a second end wall of the filter housing in order to guide the first, second and third valve discs in the filter housing.

According to a further aspect, an actuator is connected to the central actuating shaft, which actuator is configured to displace the central actuating shaft for displacing the filter element and the valve arrangement between the first position and the second position.

The actuator may be a hydraulic, pneumatic and/or electric actuator for displacing the central actuating shaft in the linear direction. A control device may be connected to the actuator for displacing the central actuating shaft at predetermined intervals. A sensor at the filter arrangement may detect a pressure drop over the filter element and communicate to the control device to displacing the central actuating shaft for flushing and cleaning the filter element.

According to a further aspect, the filter housing comprises three chambers, which are configured to be fluidly connected to each other and sealed-off from each other by the valve arrangement.

The connection between the chambers may be provided with abutment surfaces or sealing surfaces for the valve arrangement. Displacing the valve arrangement may selectively fluidly connect and seal-off the chambers to and from each other for controlling and directing the fluid flow through the filter element. The chambers may have inner walls with a shape, which allows the fluid to flow in and out of the filter element.

According to a further aspect, the filter housing comprises a first chamber comprising the first outlet, a second chamber comprising the fluid inlet, and a third chamber comprising the second outlet.

Displacing the valve arrangement may selectively fluidly connect and seal-off the chambers to and from each other for controlling and directing the fluid flow through the filter element. Further, displacing the valve arrangement may selectively direct the fluid flow into the chambers and out through the first and second outlets.

According to a further aspect, a fluid handling system is provided, comprising the filter arrangement. The fluid handling system further comprises a process fluid tank connectable to the fluid inlet and a cleaning fluid tank connectable to the fluid inlet, which process fluid tank is fluidly connected to the fluid inlet when the filter element is displaced in to a filtering position corresponding to one of the first position and the second position and which cleaning fluid tank is fluidly connected to the fluid inlet when the filter element is displaced in to a flushing position corresponding to the other of the first position and the second position.

Interruptions of processing fluid in such fluid handling system during cleaning of the filter element, may be very short when having a cleaning fluid tank. Due to the reliability of the filter arrangement in the fluid handling system the flushing and cleaning of the filter element may be performed in a very short period of time. Further, due to the displacement of the valve arrangement in the linear direction, wear of the valve arrangement may be reduced, which increases the reliability of the filter arrangement. The fluid in the cleaning fluid tank for flushing and cleaning the filter element may be a cleaning fluid. Controlling of the connection of the process fluid tank and the cleaning tank to the fluid inlet may be synchronized with the controlling of the displacement of the filter element and the valve arrangement. When the filter element is displaced in to a filtering position corresponding to one of the first position and the second position the process fluid tank is fluidly connected to the fluid inlet and a pump may deliver process fluid to the fluid inlet. When the filter element is displaced in to a flushing position corresponding to one of the first position and the second position the cleaning fluid tank is fluidly connected to the fluid inlet and a pump may deliver cleaning fluid to the fluid inlet and through the filter element.

According to a further aspect, a method is provided for flushing and cleaning the filter element of the filter arrangement disclosed herein. The method comprises the steps of: displacing the filter element from the first position to the second position, or from the second position to the first position; and flushing the filter element by a fluid.

These method steps allows the filter arrangement to be used for filtering a fluid when the filter element is displaced in the first position, and for cleaning the filter element, when the filter element is displaced in the second position. Alternatively, the filter arrangement can be used for filtering a fluid when the filter element is displaced in the second position, and for cleaning the filter element, when the filter element is displaced in the first position. Thus, the filter arrangement may be used in at least two filtering directions. Further, displacing the filter element from the first position to the second position, or from the second position to the first position may be performed in a single linear displacement in two opposite directions along a common axis.

According to a further aspect, the method comprises the further step of: displacing the filter element back from the first position to the second position, or from the second position to the first position, for filtering the fluid through the filter element.

When the filter element has been flushed by the fluid, particles and solids accumulated on the filter element has been removed from the filter element and the filter element is clean. The cleaned filter element is ready for filtering the fluid through the filter element and is therefore displaced back from the first position to the second position, or from the second position to the first position, for filtering the fluid through the filter element.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 schematically illustrates in a sectional view, a filter arrangement in a first position according to an example;
Figure 2 schematically illustrates in a sectional view, the filter arrangement in a second position according to an example;
Figure 3 schematically illustrates in a view of perspective, the filter arrangement in the first position according to an example; and
Figure 4 shows a flowchart of a method for flushing and cleaning a filter element of a filter arrangement.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

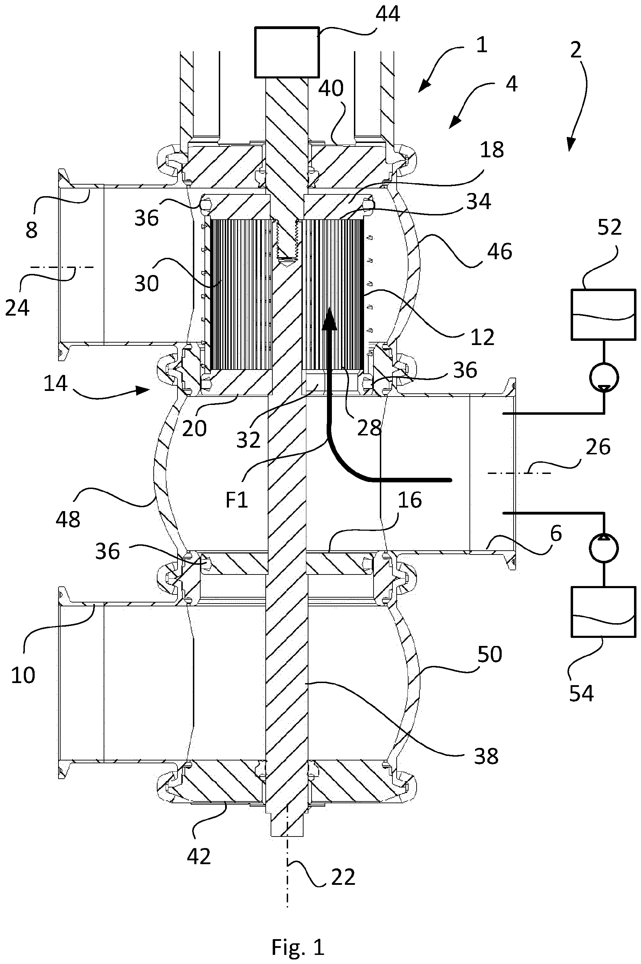

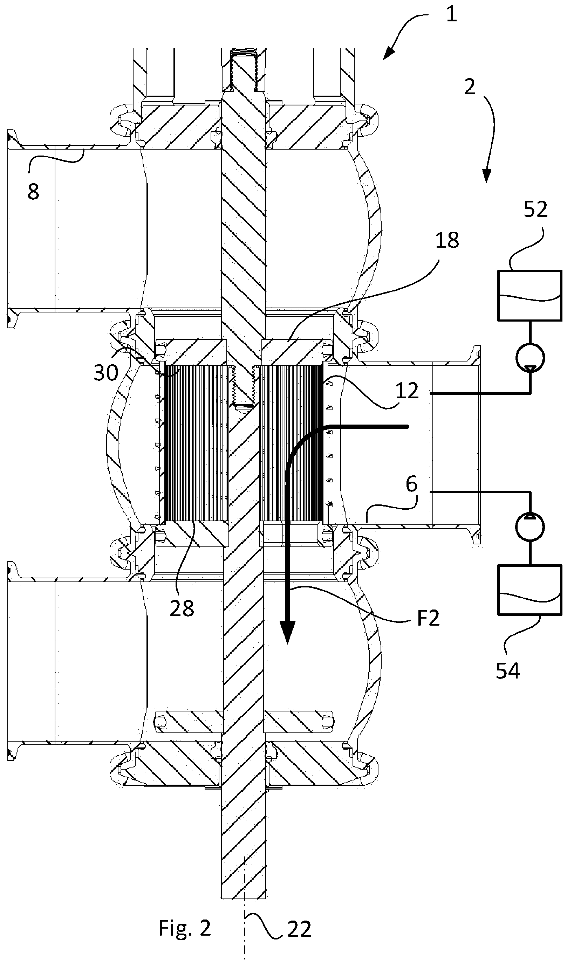

Figure 1 schematically illustrates in a sectional view, a filter arrangement 1 in a first position according to an example. The filter arrangement 1 may be configured to be arranged in a fluid handling system 2. The filter arrangement 1 comprises a filter housing 4, which has a fluid inlet 6, a first outlet 8 and a second outlet 10. A filter element 12 is displaceable in a linear direction in the filter housing 4 to a first position shown in fig. 1 and to a second position shown in fig. 2. A valve arrangement 14 is displaceable in the linear direction together with the filter element 12. The valve arrangement 14 comprises first and second valve discs 16, 18, which are configured to control a fluid flow in the filter housing 4 and through the filter element 12. When the filter element 12 is displaced in the first position, the fluid flow is directed through the filter element 12 in a first direction, and the first valve disc 16 is displaced to close the second outlet 10. The fluid flow directed through the filter element 12 in the first direction is indicated by the arrow F1. The filter element 12 is in the first position configured to filtering the fluid in the fluid flow. The filter element 12 has an axial extension and an outer surface 30 encircling a center axis 22. The fluid flow in the first position is configured to flow in through a first end opening 28 of the filter element 12 and out through the outer surface 30 of the filter element 12. A third valve disc 20, provided with through openings 32, is arranged at the first end opening 28 of the filter element 12 and the second valve disc 18 is arranged to close a second end opening 34 of the filter element 12. The third valve disc 20 comprises a sealing element 36 at the periphery, wherein the sealing element 36 is configured to guide the fluid flow through openings 32 of the third valve disc 20. The first valve disc 16 is arranged at a distance from the filter element 12. The first and second valve discs 16, 18 comprise sealing elements 36 at the periphery. The first and second valve discs 16, 18 are connected to a central actuating shaft 38, which extends through a first end wall 40 of the filter housing 4. An actuator 44 is connected to the central actuating shaft 38, which actuator 44 is configured to displace the central actuating shaft 38 for displacing the filter element 12 and the valve arrangement 14 between the first position and the second position. The filter housing 4 comprises three chambers 46, 48, 50, which are configured to be fluidly connected to each other and sealed-off from each other by the valve arrangement 14. The filter housing 4 comprises a first chamber 46, which comprises the first outlet 8, a second chamber 48 comprising the fluid inlet 6, and a third chamber 50 comprising the second outlet 10.

Figure 2 schematically illustrates in a sectional view, the filter arrangement 1 in the second position according to an example. The filter element 12, is restricted to a single linear displacement in two opposite directions along a common axis, which coincides with the center axis 22. When the filter element 12 is displaced in the second position, the fluid flow is directed through the filter element 12 in an opposite direction to the first direction shown in fig. 1, and the second valve disc 18 is displaced to close the first outlet 8. The fluid flow directed through the filter element 12 in an opposite direction to the first direction is indicated by the arrow F2 in fig. 2. The filter element 12 is in the second position configured to be flushed and cleaned by the fluid in the fluid flow. The fluid flow in the second position is configured to flow in through the outer surface 30 of the filter element 12 and out through the first end opening 28 of the filter element 12.

The fluid handling system 2 further comprises a process fluid tank 52, which is connectable to the fluid inlet 6 and a cleaning fluid tank 54 connectable to the fluid inlet 6. The process fluid tank 52 is fluidly connected to the fluid inlet 6 when the filter element 12 is displaced in to a filtering position corresponding to one of the first position and the second position. The cleaning fluid tank 54 is fluidly connected to the fluid inlet 6 when the filter element 12 is displaced in to a flushing position corresponding to the other of the first position and the second position.

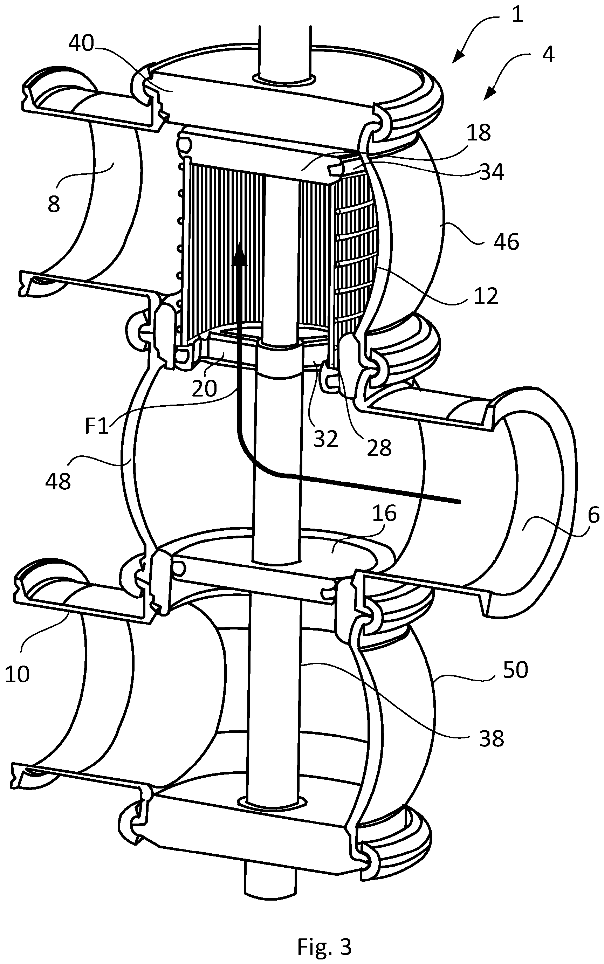

Figure 3 schematically illustrates in a view of perspective, the filter arrangement 1 in the first position according to an example. The filter element 12 is displaced in to the first position in the filter housing 4. The fluid flow is directed through the filter element 12 in a first direction, as indicated by the arrow F1. The first valve disc 16 is displaced to close the second outlet 10. The third valve disc 20, provided with through openings 32, is arranged at the first end opening 28 of the filter element 12 and the second valve disc 18 is arranged to close the second end opening 34 of the filter element 12. The central actuating shaft 38 extends through the first end wall 40 of the filter housing 4. The first chamber 46 comprises the first outlet 8, the second chamber 48 comprising the fluid inlet 6, and the third chamber 50 comprising the second outlet 10.

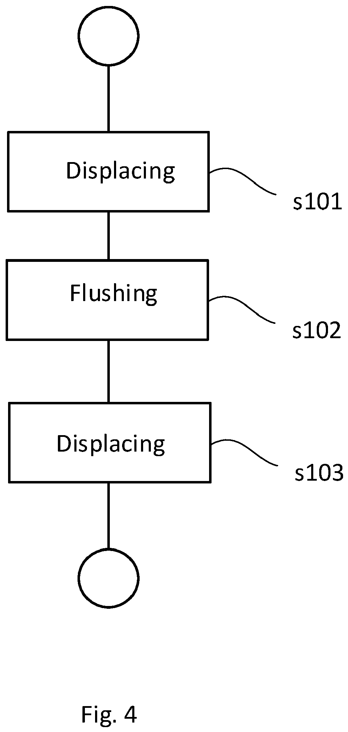

Figure 4 shows a flowchart of a method for flushing and cleaning a filter element of the filter arrangement. The method thus relates to flushing and cleaning a filter element of the filter arrangement disclosed in figures 1- 3. The method comprises the steps of displacing s101 the filter element 12 from the first position to the second position, or from the second position to the first position, and flushing s102 the filter element 12 by a fluid.

The method comprises the further step of displacing s103 the filter element 12 back from the first position to the second position, or from the second position to the first position, for filtering the fluid through the filter element 12.

The person skilled in the art realizes that the present disclosure is not limited to the preferred embodiments described above. The person skilled in the art further realizes that modifications and variations are possible within the scope of the appended claims. Additionally, variations to the disclosed preferred embodiments can be understood and effected by the skilled person in practicing the claimed disclosure, from a study of the drawings, the disclosure, and the appended claims.

## Claims

1. A filter arrangement (1) for a fluid handling system (2), said filter arrangement (1) comprising:
a filter housing (4) comprising a fluid inlet (6), a first outlet (8) and a second outlet (10);
a filter element (12), which is displaceable in a linear direction in the filter housing (4) to a first position and to a second position; and
a valve arrangement (14), which is displaceable in the linear direction together with the filter element (12);
wherein the valve arrangement (14) comprises a first and a second valve disc (16,18), which are configured to control a fluid flow in the filter housing (4) and through the filter element (12);
wherein, when the filter element (12) is displaced in the first position, the fluid flow is directed through the filter element (12) in a first direction, and the first valve disc (16) is displaced to close the second outlet (10); and
wherein, when the filter element (12) is displaced in the second position, the fluid flow is directed through the filter element (12) in an opposite direction to the first direction, and the second valve disc (18) is displaced to close the first outlet (8).

2. The arrangement (1) according to claim 1, wherein the filter element (12) is restricted to a single linear displacement in two opposite directions along a common axis.

3. The arrangement (1) according to any one of claim 1 and 2, wherein the filter element (12) in the first position is configured to filtering the fluid in the fluid flow, and wherein the filter element (12) in the second position is configured to be flushed and cleaned by the fluid in the fluid flow.

4. The arrangement (1) according to any one of the preceding claims, wherein the filter element (12) has an axial extension and an outer surface (30) encircling a center axis (22).

5. The arrangement (1) according to claim 4, wherein the fluid flow in the first position is configured to flow in through a first end opening (28) of the filter element (12) and out through the outer surface (30) of the filter element (12), and wherein the fluid flow in the second position is configured to flow in through the outer surface (30) of the filter element (12) and out through the first end opening (28) of the filter element (12).

6. The arrangement (1) according to claim 5, wherein a third valve disc (20), which is provided with through openings (32), is arranged at the first end opening (28) of the filter element (12) and the second valve disc (18) is arranged to close a second end opening (34) of the filter element (12).

7. The arrangement (1) according to claim 6, wherein the third valve disc (20) comprises a sealing element (36) at the periphery, wherein the sealing element (36) is configured to guide the fluid flow through openings (32) of the third valve disc (20).

8. The arrangement (1) according to any one of the preceding claims, wherein the first valve disc (16) is arranged at a distance from the filter element (12).

9. The arrangement (1) according to any one of the preceding claims, wherein the first and second valve discs (16,18) comprise a sealing element (36) at the periphery.

10. The arrangement (1) according to any one of the preceding claims, wherein the first and second valve discs (16,18) are connected to a central actuating shaft (38), which extends through a first end wall (40) of the filter housing (4).

11. The arrangement (1) according to claim 10, wherein an actuator (44) is connected to the central actuating shaft (38), which actuator (44) is configured to displace the central actuating shaft (38) for displacing the filter element (12) and the valve arrangement (14) between the first position and the second position.

12. The arrangement (1) according to any one of the preceding claims, wherein the filter housing (4) comprises three chambers (46,48,50), which are configured to be fluidly connected to each other and sealed-off from each other by the valve arrangement (14).

13. The arrangement (1) according to claim 12, wherein the filter housing (4) comprises a first chamber (46) comprising the first outlet (8), a second chamber (48) comprising the fluid inlet (6), and a third chamber (50) comprising the second outlet (10).

14. A fluid handling system (2), comprising a filter arrangement (1) according to any one of the preceding claims, wherein the fluid handling system (2) further comprises a process fluid tank (52) connectable to the fluid inlet (6) and a cleaning fluid tank (54) connectable to the fluid inlet (6), which process fluid tank (52) is fluidly connected to the fluid inlet (6) when the filter element (12) is displaced in to a filtering position corresponding to one of the first position and the second position and which cleaning fluid tank (54) is fluidly connected to the fluid inlet (6) when the filter element (12) is displaced in to a flushing position corresponding to the other of the first position and the second position.

15. A method for flushing and cleaning a filter element (12) of a filter arrangement (1) according to any one of claims 1 - 13,
the method comprises the steps of:
displacing (s101) the filter element (12) from the first position to the second position, or from the second position to the first position; and
flushing (s102) the filter element (12) by a fluid.

16. The method according to claim 15, wherein the method comprises the further step of:
displacing (s103) the filter element (12) back from the first position to the second position, or from the second position to the first position, for filtering the fluid through the filter element (12).
